# EUROPEAN PATENT APPLICATION

(11) **EP 4 825 933 A1**
(43) Date of publication of application: **21.10.2026**
(21) Application number: 25908640.3
(22) Date of filing: 16.12.2025
(51) Int. Cl.: C09D 133/00, C09D 175/04, C09D 7/61, C09D 7/63, C09D 5/08, C08L 33/00, C08L 75/04, C08K 3/32, C08K 5/17, C08K 5/5415

(54) **SURFACE TREATMENT COMPOSITION, SURFACE TREATMENT METHOD FOR PLATED STEEL SHEET, AND SURFACE-TREATED PLATED STEEL SHEET**

(30) Priority: 17.12.2024 KR 20240189140
(71) Applicant: POSCO Co., Ltd, Gyeongsangbuk-do 37859 (KR); Buhmwoo Institute of Technology Research, Gyeonggi-do 18574 (KR)
(72) Inventor: BAEK, Je-Hoon, Pohang-si, Gyeongsangbuk-do 37877 (KR); JANG, Ei-Sup, Hwaseong-si, Gyeonggi-do 18615 (KR); KANG, Choon-Ho, Pohang-si, Gyeongsangbuk-do 37877 (KR); PAIK, Doo-Jin, Gwangyang-si, Jeollanam-do 57807 (KR); KANG, Byeong-Mun, Pohang-si, Gyeongsangbuk-do 37877 (KR)
(74) Representative: Meissner Bolte Partnerschaft mbB
(86) International application number: PCT/KR2025/021919
(87) International publication number: WO 2026/135187

(57) **Abstract**

A surface treatment composition of the present invention comprises, on the basis of the total weight of the composition, 1-50 wt% of a resin mixture in which a urethane resin and an acrylic resin are mixed; 0.01-5 wt% of a phosphoric acid-based inorganic compound; 0.01-5 wt% of an amine compound; and the balance of ammonia water, and can satisfy relation 1. [Relation 1] 2.916×10⁻² ≤ [N]/[P]×[pH] ≤ 9.689×10³ (In relation 1, [N] is the mol% of alkyl ammonium ions in the surface treatment composition, [P] is the mol% of phosphate ions in the surface treatment composition, and [pH] represents the pH of the surface treatment composition.) According to exemplary embodiments of the present invention, the surface treatment composition having improved storage stability at room temperature can be provided, and the plated steel sheet pretreated using the surface treatment composition so as to have excellent corrosion resistance and blackening resistance can be provided.

## Description

### Technical Field

The present disclosure relates to a surface treatment composition, a surface treatment method for a plated steel sheet, and a surface-treated plated steel sheet.

### Background Art

A surface treatment composition for a plated steel sheet containing an acrylic acid resin is mainly used to form a pre-treatment layer on a resin-coated steel sheet for various applications, such as a pre-shielded steel sheet, a fuel tank steel sheet, and the like. When preparing a steel sheet coating composition using an acrylic acid resin, it is necessary to neutralize the acrylic acid resin. To this end, methods have been proposed to form a dispersion by adding a neutralizing agent or using a solvent with a relatively high pH.

In addition, research has been continuously conducted on adding additional additives to surface treatment compositions to improve adhesion with steel sheets and further improve corrosion resistance.

However, there has been a problem in which such additives caused side reactions with an existing main resin or a solvent, reducing the stability of a solution and making it difficult to control the physical properties of the solution.

(Patent Document 1) Korean Patent Publication No. 10-1998-0020581

### Summary of Invention

### Technical Problem

An object of the present disclosure is to provide a surface treatment composition having improved storage stability at room temperature.

Furthermore, an object of the present disclosure is to provide a plated steel sheet having improved corrosion resistance and blackening resistance.

An object of the present disclosure is not limited to the above description. The object of the present disclosure will be understood from the entire contents of the present specification, and a person skilled in the art to which the present disclosure pertains will understand an additional object of the present disclosure without difficulty.

### Solution to Problem

According to exemplary embodiments, a surface treatment composition is provided. The surface treatment composition includes, based on a total weight of the composition, 1 to 50 wt% of a resin mixture in which a urethane resin and an acrylic resin are mixed; 0.01 to 5 wt% of a phosphate-based inorganic compound; 0.01 to 5 wt% of an amine compound; and a remainder of ammonia water, wherein the following Relational Expression 1 may be satisfied. [Relational Expression 1] $2.916 \times {10}^{- 2} \leq \frac{\left[N\right]}{\left[P\right]} \times \left[pH\right] \leq 9.689 \times {10}^{3}$

In Relational Expression 1, [N] is a mol% of alkyl ammonium ions in the surface treatment composition, [P] is a mol% of phosphate ions in the surface treatment composition, and [pH] is a pH of the surface treatment composition.

The resin mixture may be a mixture of a urethane resin and an acrylic resin in a weight ratio of 100:1 to 1:100.

The phosphate-based inorganic compound may be one or more selected from the group consisting of ammonium phosphate compounds and phosphate ester compounds.

The amine compound may be triethylamine.

Optionally, based on the total weight of the composition, further included may be one or more of 0.01 to 5 wt% of a curing agent; 0.01 to 5 wt% of a titanium-based chelate; and 0.01 to 5 wt% of a silane compound.

The curing agent may be one or more selected from the group consisting of melamine-based curing agents and isocyanate-based curing agents.

According to other exemplary embodiments of the present disclosure, a surface treatment method for a plated steel sheet is provided. The surface treatment method for the plated steel sheet may include operations of: applying the surface treatment composition to the plated steel sheet, so that a dry film thickness is 0.05 to 20 µm; and baking the plated steel sheet to which the surface treatment composition has been applied to form a pretreatment layer.

According to another exemplary embodiment of the present disclosure, a surface-treated plated steel sheet may be provided. The surface-treated plated steel sheet may include a plated steel sheet; and a pretreatment layer formed by curing the surface treatment composition described above on the plated steel sheet.

### Advantageous Effects of Invention

As set forth above, according to exemplary embodiments of the present disclosure, a surface treatment composition having improved storage stability at room temperature may be provided.

Furthermore, according to other exemplary embodiments of the present disclosure, a plated steel sheet having excellent corrosion resistance and blackening resistance may be provided by being pre-treated using the surface treatment composition described above.

The various and beneficial advantages and effects of the present disclosure are not limited to the above-described contents, and may be more easily understood through descriptions of specific embodiments of the present disclosure.

### Best Mode for Invention

Hereinafter, preferred embodiments of the present disclosure will be described in detail with reference to the attached drawings. Prior to the detailed description of the present disclosure, the terms or words used in the present specification and claims described below should not be construed as being limited to a common or dictionary meaning, and the inventor intends to use his/her invention in the best way he or she knows how.

In the following embodiments, terms such as first, second, and the like are used not in a limited sense, but for the purpose of distinguishing one component from another component.

In the following embodiments, singular terms include plural terms unless the context clearly dictates otherwise.

In the following embodiments, terms such as include or have mean that the features or components described in the specification exist, and do not exclude in advance the possibility of adding one or more other features or components.

In the drawings, for convenience of explanation, the sizes of components may be exaggerated or reduced. For example, the size and thickness of each component shown in the drawings are shown arbitrarily for convenience of explanation, so the present invention is not necessarily limited to that which is shown.

In a case in which an embodiment can be implemented differently, a specific process sequence may be performed differently from the described sequence. For example, two processes described in succession may be performed at substantially the same time, or may be performed in an order opposite to the order described.

In addition, in describing the present disclosure, when it is determined that a detailed description of related known components or functions thereof may obscure the essence of the disclosure, such detailed description thereof is omitted.

Hereinafter, the present disclosure will be described in detail through each embodiment or example of the present disclosure. It should be noted that each embodiment or example described in the present specification is not limited to a single embodiment or example, and combinations with other embodiments or examples are also possible. Therefore, the citation of claims in the scope of the patent claims is only an example of an embodiment, and the technical idea of the present disclosure should not be interpreted only as a combination with the cited claims, and combinations with various claims are also included in the scope of the technical idea of the present disclosure.

Hereinafter, the present disclosure will be described in detail through examples. However, it should be noted that the examples described below are intended only to illustrate and concretize the present disclosure and are not intended to limit the scope of the present disclosure. This is because the scope of the present disclosure is determined by the matters described in the patent claims and matters able to be reasonably inferred therefrom.

### [Surface Treatment Composition]

According to exemplary embodiments, a surface treatment composition may include a resin mixture in which a urethane resin and an acrylic resin are mixed; a phosphate-based inorganic compound; an amine compound; and a remainder of ammonia water.

The resin mixture may include a urethane resin and an acrylic resin acting as a binder. According to exemplary embodiments, the resin mixture may be included in an amount of 1 to 50 wt% based on a total weight of the composition. When a content of the resin mixture is less than 1 wt%, the viscosity is low, and there may be a concern that it may be difficult to control the thickness of the pretreatment layer during steel sheet surface treatment operations. Therefore, the content of the resin mixture may be 1 wt% or more. More specifically, the weight of the resin mixture may be 10 wt% or more. When the content of the resin mixture exceeds 50 wt%, a solids content of the surface treatment composition increases, which may reduce the storage stability of a solution. Therefore, the content of the resin mixture may be 50 wt% or less. More specifically, the content of the resin mixture may be 45 wt% or less.

The resin mixture may be a mixture of a urethane resin and an acrylic resin in a weight ratio of 100:1 to 1:100. By controlling a mixing ratio of the urethane resin and the acrylic resin in the resin mixture to be within the above-described range, it is possible to prevent a decrease in the chemical resistance and alkali resistance of the pretreatment layer of the plated steel sheet.

The urethane resin and acrylic resin that can be used in the present disclosure are not particularly limited, and materials generally used in the field of surface treatment of steel sheets may be used. In addition, the resin mixture may be used in a form dispersed in water, alcohol, or a mixture thereof.

According to exemplary embodiments, a phosphate-based inorganic compound may be included in an amount of 0.01 to 5 wt% based on a total weight of the composition. The phosphate-based inorganic compound may contribute to improving the corrosion resistance and blackening resistance of a plated steel sheet. When the content of a phosphate-based inorganic compound is less than 0.01 wt%, the blackening resistance of the surface treatment composition is reduced, and there is a risk that the blackening resistance of the finally surface-treated galvanized steel sheet may be reduced. Therefore, the content of the phosphate-based inorganic compound may be 0.01 wt% or more. When the content of the phosphate-based inorganic compound exceeds 5 wt%, there is a concern that a plating layer of the plated steel sheet to which the surface treatment composition has been applied may oxidize. Accordingly, the content of the phosphate-based inorganic compound may be 5 wt% or less. More specifically, the content of the phosphate-based inorganic compound may be 4 wt% or less.

According to exemplary embodiments, the phosphate-based inorganic compound may be any one of an ammonium phosphate compound, a phosphate ester compound, and a polymer thereof. More specifically, the phosphate-based inorganic compound may be an ammonium phosphate compound.

Meanwhile, within a solution of the surface treatment composition, phosphate-based inorganic compounds may dissociate into ions and disrupt a state of equilibrium of a solution within the solution. More specifically, phosphate-based inorganic compounds may dissociate into phosphate ions and cations within a solvent, and when the resulting cation is an ammonium ion, it can change an ion concentration within the solution. In particular, as described below, when ammonia water is used as a solvent, when ammonium phosphate is added to ammonia water having dissociated into ammonium ions and hydroxide ions, a reverse reaction in which ammonium ions are converted into ammonia gas is strengthened, which may cause the pH in the solution to change and the solubility to decrease. As a result, solidification or gelation of resin species forming the surface treatment composition may occur, and solution stability may be reduced by phosphate-based inorganic compounds.

Accordingly, according to exemplary embodiments of the present disclosure, the surface treatment composition includes an amine compound. The amine compound may dissociate into alkyl ammonium ions and hydroxide ions in a solution. As a result, the amine compound may maintain a high pH of the solution and have a relatively high boiling point, so the amine compound may not easily volatilize at room temperature. As a result, the overall solution stability of the surface treatment composition may be increased, and consequently, when a plated steel sheet is surface treated, the surface treatment composition may stably undergo a crosslinking reaction to form a pretreatment layer having excellent physical properties.

The amine compound may stabilize a surface treatment composition solution as a pH of the amine compound is maintained at a high level. In addition, it may be more preferable when the amine compound has a boiling point that evaporates before a curing temperature of the surface treatment composition is reached, but does not easily evaporate at room temperature. When the amine compound has such properties, the type of amine compound is not particularly limited. That is, the amine compound may include one or more of primary amines, secondary amines, tertiary amines, and polymers thereof having the properties described above. According to exemplary embodiments, the amine compound may include any one of triethylamine (TEA), dimethylethanolamine (DMEA), aminomethylpropanol (AMP), and polymers thereof, but it should be noted that any amine compound having the properties described above may be used without limitation.

According to exemplary embodiments, the amine compound may be included in an amount of 0.01 to 5 wt% based on a total weight of the composition. When a content of the amine compound is less than 0.01 wt%, there is a concern that the stability of the surface treatment composition may be reduced and the storage period may be shortened. Accordingly, the content of the amine compound may be 0.01 wt% or more. More specifically, the content of the amine compound may be 0.1 wt% or more. Even more specifically, the content of the amine compound may be 1 weight% or more. However, when the content of the amine compound exceeds 5 wt%, it may reduce the crosslinking reactivity of the resin mixture and potentially reduce the durability of the pretreatment layer. Accordingly, the content of the amine compound may be 5 wt% or less. More specifically, the content of the amine compound may be 3 wt% or less.

In addition, the surface treatment composition may include ammonia water as a remainder. Ammonia water may neutralize an acrylic resin, thereby facilitating the storage of the surface treatment composition. According to exemplary embodiments, the pH of the surface treatment composition may be 9 to 12. This can increase the water dispersibility of the urethane resin or acrylic resin, and facilitate the storage of the surface treatment composition.

According to exemplary embodiments, the surface treatment composition may satisfy the following Relational Expression 1. [Relational Expression 1] $2.916 \times {10}^{- 2} \leq \frac{\left[N\right]}{\left[P\right]} \times \left[pH\right] \leq 9.689 \times {10}^{3}$

In Relational Expression 1, [N] is a mol% of alkyl ammonium ions in the surface treatment composition, [P] is a mol% of phosphate ions in the surface treatment composition, and [pH] is a pH of the surface treatment composition. Alkyl ammonium ions may be derived from amine compounds, and phosphate ions may be derived from phosphate-based inorganic compounds. [N] and [P] may be calculated using a molecular weight (g/mol), concentration (g/cm³), and ion oxidation number of the amine compounds and phosphate ions added to the surface treatment composition. By satisfying Relational Expression 1, the ammonium ions derived from the amine compound maintain a state of equilibrium of a solution, thereby improving the stability of the solution at room temperature. Furthermore, when surface treatment of a plated steel sheet is performed using a surface treatment composition satisfying Relational Expression 1, the corrosion resistance of the plated steel sheet may be further improved. Since Relational Expression 1 is an empirically obtained value, a separate unit may not be defined, and it is sufficient to satisfy only a unit of each variable.

Optionally, according to exemplary embodiments, the surface treatment composition may further include, based on the total weight of the composition: one or more of 0.01 to 5 wt% of a curing agent; 0.01 to 5 wt% of a titanium-based chelate; and 0.01 to 5 wt% of a silane compound.

The curing agent reacts with the resin mixture to form crosslinks, and one or more curing agents selected from the group consisting of melamine-based curing agents and isocyanate-based curing agents may be used. As a non-limiting example, the melamine-based curing agent may be one or more of melamine resin, alkyl melamine, and fluorinated melamine, but the present disclosure is not limited thereto. As one example, the curing agent may be alkyl melamine.

The curing agent may be included in an amount of 0.01 to 5 wt% based on a total weight of the composition. When a content of the curing agent is less than 0.01 wt%, an incomplete cross-linking reaction may occur, which may lead to a decrease in the durability and scratch resistance of a pretreatment layer formed on a surface of the plated steel sheet. When the content of the curing agent exceeds 5 wt%, there is a concern that the storage stability of a solution may decrease.

A titanium-based chelate may be added to ensure resin adhesion and further improve corrosion resistance through coupling between the surface of the plated steel sheet and a resin layer. As a non-limiting example, the titanium-based chelate may include one or more of titanium butyl phosphate (TBP), titanium dipropoxybiscetylacetonate (T-50, TAA), and propanedioxytitanium bisethyl cetoacetate (T-60), but the present disclosure is not limited thereto.

The titanium-based chelate may be included in an amount of 0.01 to 5 wt% based on a total weight of the composition. When a content of the titanium-based chelate is less than 0.01 wt%, corrosion resistance and resin adhesion may deteriorate. When the content of titanium-based chelate exceeds 5 wt%, there is a concern that the dispersion stability of a resin may decrease.

A silane compound may serve as an adhesion promoters in a surface treatment composition. As a non-limiting example, the silane compound may be GPTMS ((3-Glycidoxypropyl)trimethoxysilane), but the present disclosure is not limited thereto.

The silane compound may be included in an amount of 0.01 to 5 weight% based on a total weight of the composition. When a content of the silane compound is less than 0.01 wt %, there is a concern that the adhesion of a pretreatment layer formed on a surface of the plated steel sheet may be reduced. When the content of the silane compound exceeds 5 wt %, there is a possibility that the storage stability of the surface treatment composition may be reduced.

### [Surface treatment method for a plated steel sheet]

According to exemplary embodiments, a surface treatment method for a plated steel sheet may include operations of applying a surface treatment composition, and baking the plated steel sheet, and then cooling the same to form a pretreatment layer.

### Application operation

An application operation may be an operation of applying the surface treatment composition described above to a plated steel sheet so that a dry film thickness is 0.05 to 20 µm.

For the surface treatment composition, the description of the surface treatment composition described above may be referred.

When the thickness of the dry film is less than 0.05 µm, corrosion resistance may be reduced. When the thickness of the dry film exceeds 20 µm, there is a possibility that the film will not be completely dried during the subsequent baking and curing process.

### Operation of forming a pretreatment layer

An operation of forming a pretreatment layer may be an operation of baking a plated steel sheet to which a surface treatment composition has been applied and then cooling the same.

A baking temperature is not particularly limited as long as the applied surface treatment composition may be cured. As a non-limiting example, the baking temperature may be 60 to 200°C. When the baking temperature is lower than 60°C, drying may be incompletely performed, which may reduce the corrosion resistance, chemical resistance, alkali resistance, and cleaning resistance of a surface-treated plated steel sheet. When the baking temperature is higher than 200°C, there is a concern that the pretreatment layer may turn yellowish-brown or that the workability of the surface-treated plated steel sheet may decrease.

After baking, cooling is not particularly limited, and conditions commonly used in the relevant technical field may be applied without restriction.

### [Surface-treated plated steel sheet]

According to exemplary embodiments, a surface-treated plated steel sheet may include a plated steel sheet and a pretreatment layer formed by curing the surface treatment composition described above. As for a plated steel sheet, plated steel sheets that are commonly used as surface treatment targets in the relevant technical field may be applied without restriction. As a non-limiting example, the plated steel sheet may be any one of hot-dip galvanized steel sheet, alloyed hot-dip galvanized steel sheet, and electroplated steel sheet. Since the surface-treated plated steel sheet includes a pretreatment layer formed by a surface treatment composition having excellent storage stability, the surface-treated plated steel sheet may have excellent alkali resistance, blackening resistance, corrosion resistance, solvent resistance, and chemical resistance.

### Mode for Invention

### [Example]

Hereinafter, embodiments of the present disclosure will be described in detail. The following embodiments are for the purpose of understanding the present disclosure only and are not intended to limit the disclosure.

### 1. Preparation of a surface treatment composition for a plated steel sheet

### (1) Examples 1 to 5

A surface treatment composition for a plated steel sheet having the compositions shown in Table 1 below was prepared. Each component used herein is as follows.
- Acrylic resin: Ethylene acrylic acid resin
- Urethane resin: Water-dispersible polyurethane resin
- Amine compound: Triethylamine
- Curing agent: Melamine-based curing agent
- Titanium-based chelate: Titanium butyl phosphate (TBP)
- Phosphate-based inorganic compound: Triammonium phosphate

In Table 1, a content of each component is based on a total weight of the composition, and a remainder thereof is ammonia water.

The surface treatment composition prepared above was stored for 0 hours, 24 hours, 72 hours, 96 hours, and 120 hours, respectively, referred to by Examples 1 to 5, respectively.

### (2) Comparative Examples 1 to 3

A surface treatment composition for a plated steel sheet identical to Examples 1 to 5 was prepared, except that the composition did not contain triethylamine. The surface treatment composition for a plated steel sheet prepared above was stored for 0 hours, 24 hours, and 72 hours, respectively, referred to by Comparative Examples 1 to 3, respectively.

### (3) Comparative Examples 4 to 6

A surface treatment composition for a plated steel sheet identical to Examples 1 to 5 was prepared, except that the composition contain 6 wt% of triethylamine and did not contain a phosphate-based inorganic compound. The surface treatment composition for a plated steel sheet prepared above was stored for 0 hours, 24 hours, and 72 hours, respectively, referred to by Comparative Examples 4 to 6, respectively.

**[Table 1]**

| | Acrylic resin (wt%) | Urethan e resin (wt%) | Amine compoun d (wt%) | Curing agent (wt%) | Titaniu m-based chelate (wt%) | Phosphate -based inorganic compound (wt%) | pH | Whether Relational Expression 1 is satisfied (value in Relational Expression 1) |
|---|---|---|---|---|---|---|---|---|
| Examples 1 to 5 | 17 | 17 | 1.5 | 0.6 | 2.5 | 0.1 | 10.6 | O (12.47) |
| Comparati ve Examples 1 to 3 | 17 | 17 | 0 | 0.6 | 2.5 | 0.1 | 9.3 | X (0) |
| Comparati ve Examples 4 to 6 | 17 | 17 | 6 | 0.6 | 2.5 | 0 | 11.4 | X (-) |

### 2. Preparation of a surface-treated plated steel sheet

Surface treatment compositions of Examples 1 to 5 and Comparative Examples 1 to 9 were applied using a bar coater to a plated steel sheet having a plating adhesion amount of about 20 g/m² and a thickness of about 0.6 mm, to have a dry film thickness of 0.8 to 1 µm. Thereafter, a plated steel sheet specimen was prepared by baking the plated steel sheet at a temperature of about 170°C and then performing water cooling.

### 3. Results of physical properties evaluation of a plated steel sheet

Alkali resistance, blackening resistance, corrosion resistance, and solvent resistance were evaluated for the plated steel sheet specimens prepared in the Examples and Comparative Examples, and the results are shown in Table 2. The evaluation criteria are as follows.

### <Alkali Resistance Evaluation Criteria>

A plated steel sheet specimen was immersed for 2 minutes in an alkaline aqueous solution of pH 12 in which degreasing agent solutions L4460A and L4460B (manufactured by Nihon Parkerizing Co., Ltd.) were mixed in a predetermined ratio, and then whether a film was peeled off was observed.
⊚ : No film peeling or discoloration
○ : No film peeling, but discoloration occurs
△ : Partial peeling of film
× : Full peeling of film

### <Blackening Resistance Evaluation Criteria>

A plated steel sheet specimen was left at 60°C and 95% relative humidity for 192 hours, and a color difference value (△E) before and after leaving the specimen was measured.
⊚ : Color difference value (△E) of less than 2
○ : Color difference value (△E) of 2 or more and less than 2.5
△ : Color difference value (△E) of 2.5 or more and less than 3
× : Color difference value (△E) of 3 or more

### <Corrosion Resistance Evaluation Criteria>

The time required until white rust appeared after spraying salt water on a plated steel sheet specimen was measured.
⊚ : 144 hours or more
○ : 120 hours or more and less than 144 hours
△ : 96 hours or more and less than 120 hours
× : Less than 96 hours

### <Solvent Resistance Evaluation Criteria>

A load of 1.4 kg was applied to a plated steel specimen using ethanol cotton, and after 10 back-and-forth passes, whether a film has been removed was observed.
⊚ : No film removal
○ : Film removal of 0 to 10%
△ : Film removal of 10 to 20%
× : Film removal of 20% or more

**[Table 2]**

| | Time elapsed after preparation of composition | Alkali resistance | Blackening resistance | Corrosion resistance | Solvent resistance |
|---|---|---|---|---|---|
| Example 1 | 0 | ⊚ | ⊚ | ⊚ | ⊚ |
| Example 2 | 24 | ⊚ | ⊚ | ⊚ | ⊚ |
| Example 3 | 72 | ⊚ | ⊚ | ⊚ | ⊚ |
| Example 4 | 96 | ⊚ | ⊚ | ⊚ | ⊚ |
| Example 5 | 120 | ⊚ | ⊚ | ⊚ | ⊚ |
| Comparative Example 1 | 0 | △ | ⊚ | ⊚ | ⊚ |
| Comparative Example 2 | 24 | X | ○ | ○ | ⊚ |
| Comparative Example 3 | 72 | X | ○ | ○ | ⊚ |
| Comparative Example 4 | 0 | ⊚ | ⊚ | X | ⊚ |
| Comparative Example 5 | 24 | ⊚ | ⊚ | X | ⊚ |
| Comparative Example 6 | 72 | ⊚ | ⊚ | X | ⊚ |

### 4. Blackening resistance evaluation according to a content of phosphate-based inorganic compounds

Surface treatment compositions having the composition of Table 3 below (Examples 6 to 8 and Comparative Examples 7 to 8) were applied using a bar coater to a plated steel sheet having a plating adhesion amount of about 20 g/m² and a thickness of about 0.6 mm, to have a dry film thickness of 0.8 to 1 µm. Thereafter, a specimen was prepared by baking the plated steel sheet at a temperature of about 170°C and then performing water cooling. To evaluate blackening resistance, a plated steel sheet specimen was left at about 60°C and 95% relative humidity for 72 hours, and a color difference value (ΔE) before and after leaving the specimen was measured.

**[Table 3]**

| | Content of Phosphate-based inorganic compound (wt %) | Whether Relational Expression 1 is satisfied | Initial whiteness (L value) | Color difference value (ΔE) |
|---|---|---|---|---|
| Example 6 | 0.1 | ○ | 72-75 | ⊚ |
| Example 7 | 0.5 | ○ | 71-74 | ⊚ |
| Example 8 | 1 | ○ | 70-73 | ⊚ |
| Comparative Example 7 | 0 | X | 73-76 | ○ |
| Comparative Example 8 | 6 | X | less than 70 | ⊚ |

When a composition not containing a phosphate-based inorganic compound (Comparative Example 7) was used, the color difference value (△E) in the blackening resistance evaluation was 2.4, and blackening occurred in the plated steel sheet. Meanwhile, when a composition containing an excess amount of a phosphate-based inorganic compound (Comparative Example 8) was used, a plating layer oxidized upon application of the composition, resulting in a significantly lower initial whiteness value compared to Examples 6 to 8.

While the present invention has been described in detail through exemplary embodiment, other types of exemplary embodiments are also possible. Therefore, the technical concept and scope of the claims described below are not limited to the embodiments.

## Claims

1. A surface treatment composition, comprising, based on a total weight of the composition:
1 to 50 wt % of a resin mixture in which a urethane resin and an acrylic resin are mixed;
0.01 to 5 wt % of a phosphate-based inorganic compound;
0.01 to 5 wt % of an amine compound; and
a remainder of ammonia water,
wherein the following Relational Expression 1 may be satisfied, [Relational Expression 1] $2.916 \times {10}^{- 2} \leq \frac{\left[N\right]}{\left[P\right]} \times \left[pH\right] \leq 9.689 \times {10}^{3}$
in Relational Expression 1, [N] is a mol% of alkyl ammonium ions in the surface treatment composition, [P] is a mol% of phosphate ions in the surface treatment composition, and [pH] is a pH of the surface treatment composition.

2. The surface treatment composition of claim 1, wherein the resin mixture is a mixture of an urethane resin and an acrylic resin in a weight ratio of 100:1 to 1:100.

3. The surface treatment composition of claim 1, wherein the phosphate-based inorganic compound is one or more selected from the group consisting of ammonium phosphate compounds and phosphate ester compounds.

4. The surface treatment composition of claim 1, wherein the amine compound is triethylamine.

5. The surface treatment composition of claim 1, further comprising one or more of, based on the total weight of the composition:
0.01 to 5 wt% of a curing agent;
0.01 to 5 wt% of a titanium-based chelate; and
0.01 to 5 wt% of a silane compound.

6. The surface treatment composition of claim 5, wherein the curing agent is one or more selected from the group consisting of melamine-based curing agents and isocyanate-based curing agents.

7. A surface treatment method for a plated steel sheet, comprising operations of:
applying the surface treatment composition of any one of claims 1 to 6 to a plated steel sheet so that a dry film thickness is 0.05 to 20 µm; and
baking the plated steel sheet to which the surface treatment composition has been applied to form a pretreatment layer.

8. A surface-treated plated steel sheet, comprising:
a plated steel sheet; and
a pretreatment layer formed by curing the surface treatment composition of any one of claims 1 to 6 on the plated steel sheet.
